(19) Europäisches Patentamt
European Patent Office
Office européen des brevets

(11) Publication number: 0 127 084 B1

(12) # EUROPEAN PATENT SPECIFICATION

(45) Date of publication of patent specification: 28.01.87

(51) Int. Cl.[4]: C 08 L 59/02 // (C08L59/02, 71:02, C08K3:04)

(21) Application number: 84105647.6

(22) Date of filing: 17.05.84

(54) **Polyacetal resin composition.**

(30) Priority: 25.05.83 JP 92095/83

(43) Date of publication of application: 05.12.84 Bulletin 84/49

(45) Publication of the grant of the patent: 28.01.87 Bulletin 87/05

(84) Designated Contracting States: BE DE FR GB IT NL

(56) References cited:

PATENTS ABSTRACTS OF JAPAN, vol. 7, no. 83 (C-160)1228r, 7th April 1983;

PATENTS ABSTRACTS OF JAPAN, vol. 7, no. 242 (C-192)1387r, 27th October 1983;

(73) Proprietor: POLYPLASTICS CO. LTD.
30 Azuchimachi 2-chome
Higashi-ku Osaka-shi (JP)

(72) Inventor: Kasuga, Takuzo
16-7, Shimizu 2-chome
Suginami-ku Tokyo (JP)
Inventor: Ikenaga, Yukio
324, Miyashita
Fuji-shi Shizuoka (JP)
Inventor: Yamawaki, Masami
94-2, Gokanjima
Fuji-shi Shizuoka (JP)
Inventor: Tanimura, Keizo
52, Morishita
Fuji-shi Shizuoka (JP)

(74) Representative: Patentanwälte Grünecker, Dr. Kinkeldey, Dr. Stockmair, Dr. Schumann, Jakob, Dr. Bezold, Meister, Hilgers, Dr. Meyer-Plath
Maximilianstrasse 58
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 127 084 B1

**Description**

The present invention relates to a polyacetal resin composition which comprises polyacetal resin, 0.1 to 30 weight % of carbon black, based on the total composition and 0.1 to 10 weight % of a further component, based on the total composition.

Said composition has excellent mechanical properties, thermal stability and moldability.

The compounding of carbon black into polyacetal resin is known not only for the purpose of mere coloration but also for use of this resin as sliding parts, covering parts or the like, by providing the resin with electric conductivity and weatherability. However, the addition of a sufficient amount of carbon black to impart the desired performance to the polyacetal resin sometimes deteriorates the mechanical properties, moldability and heat stability of the polyacetal resin.

JP—A—58 115 42 describes antistatic polyacetal compositions comprising 100 pts. wt. of a polyacetal resin, 3 to 15 pts. wt. of carbon black and 3 to 10 pts. wt. of a lubrication oil, preferably a polyol-type fatty acid ester oil or a dimethylsilicone oil. Said compositions are reported to have excellent abrasion resistance and sliding characteristics as well as antistaticity.

It is the object of the present invention to provide a polyacetal resin composition having improved melt fluidity, moldability and mechanical properties.

Said object is achieved by a polyacetal resin composition which comprises polyacetal resin, 0.1 to 30 weight % of carbon black, based on the total composition, and 0.1 to 10 weight % of a further component based on the total composition characterised in that said further component is an ether copolymer of polypropylene glycol/polyethylene glycol.

The carbon black used in this invention is appropriately selected according to the purposes, e.g., for imparting electric conductivity and weatherability to polyacetal resin or for colorations. For imparting electric conductivity, carbon black which has a developed structure, small particle diameters, high porosity and a large surface area is suitable. A preferred carbon black for said purpose is electrically conductive furnace black or acetylene black. For inhibition against deterioration or coloration, furnace and channel blacks are adequate. Thermal black may also be utilized according to the uses of the resin. Any of the above-mentioned carbon blacks are usable. The amount of carbon black added may be appropriately selected according to the object in the range of 0.1 to 30 weight % of the total composition. With less than 0.1 weight % of carbon black, it is difficult to achieve the required object, while with more than 30 weight % of its incorporation into the polyacetal resin as well as extrusion becomes difficult. In view of the physical properties and compounding, a range of 0.5 to 10 weight % of carbon black based on the total composition is preferred.

The polypropylene glycol/polyethylene glycol ether copolymer according to this invention is a high molecular nonionic surfactant having a polypropylene glycol radical as a hydrophobic radical and a polyethylene glycol radical as a hydrophilic radical. The surfactant may have hydrophobic and hydrophilic radicals with their molecular weights altered according to the objects, the mean molecular weight of the hydrophobic radical preferably being 1,000 to 2,000 and the molecular weight of the nonionic surfactant being 1,300 to 15,000. The addition of the polypropylene glycol/polyethylene glycol ether copolymer to the polyacetal resin containing carbon black causes better dispersion of the carbon black into the resin, resulting in enhanced melt fluidity, improved thermal stability and moldability. Moreover, such excellent characteristics as lowered volume resistivity, improved mechanical properties, particularly elongation and impact resistance may be achieved. The amount of polypropylene glycol/polyethylene glycol ether copolymer to be added is 0.1 to 10 weight %, preferably, 1 to 5 weight % of the total resin composition. With its increasing addition, the melt fluidity, elongation or impact resistance may be improved, but an addition over 30 weight % will cause lowering of the tensile strength.

According to this invention, the polyacetal resin composition may be further compounded with an amide compound. Thereby, the thermal stability will be further improved.

The amide compound used according to this invention includes mono- or polycarboxylic acid amide compounds represented by the following general formula and ethylene oxide adducts thereof:

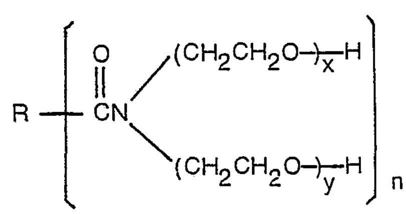

wherein R represents a carboxylic acid residue which is a saturated or unsaturated hydrocarbon radical having 2 or more carbon atoms, preferably 2 to 23 carbon atoms or R may be a radical representing a fundamental unit of a vinyl polymer or copolymer, n is an integer of 1 or above, preferably 1 to 6, and x and y are each 0 or an integer of 1 or above, preferably 1 to 10.

The amide compounds according to this invention include those of fatty acids or higher fatty acids, or ethylene oxide adducts thereof, and those of polymers of vinyl compounds or copolymers

containing vinyl compounds as major components or ethylene oxide adducts thereof. Examples of the amide compounds are butyramide, caproamide, caprylamide, capramide, lauramide, myristamide, palmitamide, stearamide, behenamide, oleamide, linolamide, linolenamide, erucamide, a natural higher fatty acid amide as a mixture of higher fatty acid amides, succinimide, adipamide, sebacamide, dodecanedicarboxyamide, 1,6-cyclohexanedicarboxyamide propane-1,2,3-tricarboxyamide, benzamide, phthalamide, terephthalamide, trimellitamide, pyromellitamide, polyacrylamide, polymethacrylamide, ethylene/acrylamide copolymer, and ethylene oxide adducts thereof. These amide compounds may be used alone or in combination of two or more. Preferable amide compounds are ethylene oxide adducts of higher fatty acid amides, especially those with the mol number of ethylene oxide added (x + y) of 2 to 7 showing a prominent effect. The addition of these amide compounds should be 0.1 to 15 weight %, preferably 0.3 to 5 weight % of the total polyacetal resin composition.

The polyacetal resin according to this invention is polyoxymethylene homopolymer or polyacetal copolymer with most of its main chain composed of oxymethylene chains.

Well known antioxidants, acid resisting agents and other additives may be compounded in the compositions. Examples of antioxidants are phenols such as 2,2′-methylenebis(4-methyl-6-t-butylphenol), hexamethylene glycol bis(3,5-di-t-butyl-4-hydroxyhydrocinnamate), tetrakis [methylene (3,5-di-t-butyl-4-hydroxyhydrocinnamate)] methane, 1,3,5-trimethyl-2,4,6-tris(3,5-di-t-butyl-4-hydroxybenzyl) benzene, 4,4′-methylenebis(2,6-di-t-butylphenol) and 1,3,5-tris(4-t-butyl-3-hydroxy-2,6-dimethylbenzyl) isocyanurate and amines such as N-phenyl-N′-isopropyl-p-phenylenediamine, N,N′-diphenyl-p-phenylenediamine, 4,4′-bis(4,α,α-dimethylbenzyl)diphenylamine, a condensate of diphenylamine with acetone, N-phenyl-β-naphthylamine and N,N′-di-β-naphthyl-p-phenylenediamine. Examples of acid resisting agents are urea, dicyandiamide, melamine, polyamide, alkalki or alkaline earth metal salts of lower and higher fatty acids, e.g., calcium stearate, hyroxides, inorganic salts or alkoxides of alkali or alkaline earth metals. These antioxidants and acid resisting agents may be used alone or in combinations of two or more.

When stearamide, lauric acid diethanolamide, etc. are used as amide compounds, the resin composition of this invention in which alkyl-substituted diphenylamine, etc. are incorporated therewith as antioxidants for amines give an especially excellent heat stabilizing effect.

Well-knowns weathering stabilizers, ultraviolet ray stabilizers or photostabilizers, may be used in the composition of the invention. Examples of such agents include ultraviolet ray stabilizers such as salicylate compounds, benzophenone compounds or benzotriazole compounds and photostabilizers such as hindered amines. In addition to the additives mentioned above, additives which further improve the dispersion of carbon black, e.g., oligomers, may be used. Oligomers are polymers having low molecular weights which themselves do not possess moldability. They should preferably be solid at normal temperature for convenience in addition operation. As examples, there may be mentioned paraffin wax, microcrystalline wax, and polyolefin waxes such as polyethylene wax or polypropylene wax. As polyethylene wax, those manufactured by thermal decomposition of a high-pressure polyethylene resin of a high molecular weight, or by direct polymerization of an ethylene monomer are usable. Generally, polyethylene wax having its molecular weight lowered by thermal decomposition at a high temperature of 300°C or above contains branches and polar radicals, so that it is especially preferable in regard to dispersibility, to polyethylene mainly composed of hydrocarbons obtained by a direct polymerization process. An example of other well-known carbon black dispersants is oil. The dispersants may be used as a mixture of two or more. They further improve heat stability and moldability, because they enhance the dispersion of carbon black, enabling a polyacetal resin to be obtained with uniform and stable mechanical properties. The desirable amount of polyolefin waxes such as the aforementioned polyethylene wax should be 0.3 to 3 weight %, preferably 0.5 to 2 weight % of the resin composition.

A composition of this invention containing electrically conductive carbon black for the purpose of improving the electrical conductivity enables a reduction of the amount of added carbon black leading to reduced costs, because only a small amount of carbon black added provides for excellent electrical properties.

The composition according to the invention provides a resulting, moulded article with antistatic property, improved resistance to abrasion and improved durability. The article is suitable for parts of electric instruments, motor cars and other instruments, such as a rotatable member, a shaft-bearing member and a slidable member. Examples of these applications are parts of audio tape recorders and video tape recorders, such as a gear, a cam, a lever, a guiding member and a clatch. The invention is also applicable to parts of a tape cassette, such as a guiding member, a roller, a post, a ball and a pin, which come in sliding contact with a running tape.

Parts of video tape recorders have been made of metal materials by complicated manufacturing steps such as the processing of metal pieces and surface polishing, which is disadvantageous and leads to expensive products.

Plastic materials have been used instead of metal materials. They, however, are easily charged electrostatically while being in contact with a running tape. Contaminants in the air happen to attach to the tape and the electrostatic charge disturbs the video image. Furthermore, plastic parts and the surface of tapes are abraded whereby the image properties are damaged. The tape is also difficult to run because of bad friction property. The electrostatic charge produces noises in the recording and playing of sound.

In order to solve those problems, the composition according to the invention is most suitable as plastic

material having antistatic property, improved mechanical properties, friction property and abrasion property.

The composition is also applicable to a rotatable member, a sliding member and other mechanical parts of various business machines such as facsimiles, copying machines, computers, radios, cameras and fiber machines. When the composition is used for the paper feeding mechanism in facsimiles and copying machines, an electrostatic charge is not produced and paper running is improved. The composition is useful to remove the electrostatic charge caused during the transmission of articles, for example, for parts of feeding pipes, inlet and outlet. Thereby seeding machines are improved.

The composition of this invention may be readily prepared by methods used for resins containing fillers. For example, a method of preparing pellets by kneading and extruding the components by use of an extruder after mixing, followed by molding, a method of mixing pellets of different compositions before molding and obtaining the composition by molding and a method of directly charging the components into a molder may be used.

Well-known additives such as organic high molecular materials or inorganic fillers may be further added to the composition of this invention. The organic high molecular materials include, for example, polyurethane, fluororesins, vinyl polymers and copolymers such as ethylene/vinyl acetate copolymer, ethylene/alkyl acrylate copolymer, styrene/butadiene/acrylonitrile copolymer and styrene/acrylonitrile copolymer, a polyphase graft copolymer composed of polyacrylate resin and thermoplastic segment type copolyester. Inorganic fillers are for example, glass fiber, carbon fiber, potassium titanate fiber, glass flake, mica, talc and metal foil. Besides, antistatic agents, coloring agents, lubricants, mold releasing agents, nucleating agents, stabilizers or surface active agents may be added to provide the desired properties.

This invention will now be described in more detail with reference to examples and comparative examples.

Examples 1 to 10 and Comparative Examples 1 and 2

Polyacetal resin powder (Duracon, a product of Polyplastics Co., Ltd.) was mixed with electrically conductive carbon black and polypropylene glycol/polyethylene glycol ether copolymer in amounts as shown in Table 1, lauric acid diethanolamide (2 weight %), and low molecular weight polyethylene wax (molecular weight 5,000, manufactured by thermal decomposition) (1 weight %) in a Henschel mixer and the mixture was melted and kneaded by use of a 28 mm two-axis extruder, thereby preparing a pellet form composition. Thereafter, test pieces were formed from these pellets using an extrusion-molder and their physical properties were measured. Measurements of the fluidity and heat stability were made of the pellets per se. Comparative examples were prepared of a composition not containing polypropylene glycol/polyethylene glycol ether copolymer and similar measurements conducted.

The values of fluidity listed are those obtained by use of a melt indexer set at 190°C. The values of heat stability refer to the rate of weight reduction by heating per minute (%/Min) when a pellet is heated in air at 230°C for 45 minutes. Volume resistivity was calculated from resistance at both ends of a test piece coated with an electrically conductive paint on both ends thereof and dried. Tensile elongation was measured by the method of ASTM D 638 and the Izod impact strength was measured by the method of ASTM D 256.

TABLE 1

| | | Amount of Addition (wt %) | | Physical Properties | | | | | |
|---|---|---|---|---|---|---|---|---|---|
| | | *1 Carbon black | Polypropylene glycol /Polyethylene glycol ether copolymer | Fluidity (g /10 min) | Heat stability (% /min) | Volume resistivity (Ω·cm) | Tensile elongation (%) | Izod impact strength notched (kg·cm /cm) | Izod impact strength not notched (kg·cm/cm) |
| Example | 1 | 4.5 | 1.0 | 11.2 | 0.024 | 780 | 8.7 | 3.8 | 66.8 |
| | 2 | 4.5 | 2.0 | 11.6 | 0.022 | 61 | 9.8 | 3.8 | 67.2 |
| | 3 | 4.5 | 2.0 *2) | 11.0 | 0.023 | 100 | 9.5 | 3.6 | 66.5 |
| | 4 | 4.5 | 3.0 | 12.9 | 0.019 | 58 | 12.4 | 4.6 | 72.6 |
| | 5 | 4.5 | 5.0 | 13.2 | 0.019 | 53 | 16.8 | 4.9 | 87.5 |
| | 6 | 4.5 | 8.0 | 13.8 | 0.018 | 49 | 17.2 | 4.8 | 86.8 |
| | 7 | 5.0 | 3.0 | 12.4 | 0.019 | 40 | 13.8 | 4.4 | 68.2 |
| | 8 | 5.0 | 3.0 *2) | 11.2 | 0.022 | 70 | 9.5 | 4.0 | 65.8 |
| | 9 | 6.0 | 3.0 | 7.6 | 0.023 | 35 | 9.3 | 4.0 | 61.0 |
| | 10 | 7.0 | 4.0 | 4.8 | 0.024 | 20 | 6.5 | 3.8 | 59.0 |
| Comparative Example | 1 | 4.5 | 0 | 10.7 | 0.028 | $3 \times 10^{13}$ | 6.1 | 3.6 | 64.7 |
| | 2 | 5.0 | 0 *2) | 5.6 | 0.080 | $4 \times 10^{12}$ | 9.0 | 3.4 | 60.8 |

*1) Ketjen black EC manufactured by Lion Akzo Co., Ltd.

*2) This composition does not contain lauric acid diethanolamide nor low molecular polyethylene wax.

Example 11 and Comparative Example 3

As in Example 1, polyacetal resin powder (Duracon, a product of Polyplastics Co., Ltd.) was mixed with furnace black and polypropylene glycol/polyethylene glycol ether copolymer in amounts as shown in Table 2 and lauric acid diethanolamide (2 weight %). Pellets were prepared from this mixture and measurements of physical properties were made. In a comparative example, similar measurements were made of a composition not containing polypropylene glycol/polyethylene glycol ether copolymer.

TABLE 2

| | Amount of Addition (wt %) | | Physical Properties | |
|---|---|---|---|---|
| | *1 Carbon black | Polypropylene glycol /Polyethylene ether copolymer | Heat stability (% /min) | Tensile strength (%) |
| Example 11 | 2.0 | 2.0 | 0.027 | 60 |
| Comparative Example 3 | 2.0 | 0 | 0.042 | 22 |

*1 ) Furnace black

Example 12 and Comparative Example 4

As in Example 1, polyacetal resin powder (Duran, a product of Polyplastics Co., Ltd.) was mixed with polypropylene glycol/polyethylene glycol ether copolymer (3 weight %), furnace black (3 weight %) and lauric acid diethanolamide (2 weight %). Pellets were prepared from this mixture.

Test pieces (120 × 120 mm square, 3mm thick) were molded from the pellets thus prepared, using a molder and a falling weight impact test was conducted on these pieces (Table 3). The impact value is given by the 50% breakdown energy (the impact energy when 50% of the total number of test pieces are broken down) as measured by using a tester of JIS K 7211.

TABLE 3

| | Amount of Addition (wt %) | | Physical Property |
|---|---|---|---|
| | * Carbon black | Polypropylene glycol /Polyethylene ether copolymer | Falling weight impact (joule) |
| Example 12 | 3.0 | 3.0 | 47.5 |
| Comparative Example 4 | 3.0 | 0 | 7.9 |

* Furnace black

**Claims**

1. A polyacetal resin composition which comprises polyacetal resin, 0.1 to 30 weight % of carbon black, based on the total composition, and 0.1 to 10 weight % of a further component, based on the total composition characterised in that said further component is an ether copolymer of polypropylene glycol/ polyethylene glycol.

2. The composition according to claim 1 characterised in that 0.1 to 1.5 weight % of an amide compound based on the total composition is compounded in the polyacetal resin composition.

3. The composition according to claim 2 characterised in that said amide compound is represented by the following general formula:

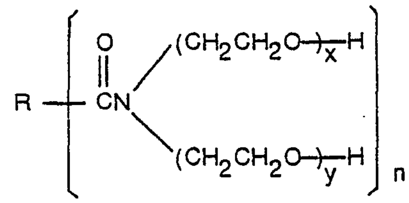

wherein:

R is a carboxylic acid residue;

x and y are each 0 or an integer of 1 or above; and

n is an integer of 1 or above.

4. The composition according to claim 2 characterised in that R in the general formula of the amide compound is a saturated or unsaturated hydrocarbon radical or a radical comprising a fundamental unit of a vinyl polymer or copolymer.

5. The composition according to claim 3 or 4 characterised in that R in the general formula of the amide compound is a saturated or unsaturated hydrocarbon radical having 2 to 23 carbon atoms.

6. The composition according to any of claims 1 to 5 characterised in that 0.3 to 3 weight % of a low molecular weight polyolefin wax based on the total composition is compounded in the composition.

7. The composition according to claim 6 characterised in that said low molecular weight polyolefin wax is polyethylene wax prepared by a thermal decomposition process.

8. The composition according to any of claims 1 to 7 characterised in that amines are compounded in the composition as antioxidant.

**Patentansprüche**

1. Polyacetalharzzusammensetzung, welche Polyacetalharz, 0,1 biz 30 Gew.-% Ruß, bezogen auf die Gesamtzusammensetzung, und 0,1 bis 10 Gew.-% einer weiteren Komponente, bezogen auf die Gesamtzusammensetzung, umfaßt, dadurch gekennzeichnet, daß die weitere Komponente ein Ethercopolymer von Polypropyleneglykol/Polyethylenglykol ist.

2. Zusammensetzung nach Anspruch 1, dadurch gekennzeichnet, daß 0,1 bis 15 Gew.-% einer Amidverbindung, bezogen auf die Gesamtzusammensetzung, in die Polyacetalharzzusammensetzung kompoundiert wird.

3. Zusammensetzung nach Anspruch 2, dadurch gekennzeichnet, daß die Amidverbindung durch die allgemeine Formel

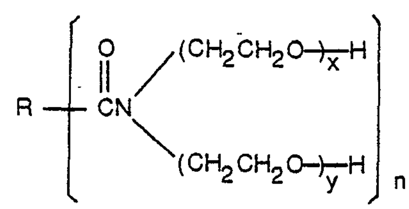

dargestellt wird, worin

R eine Carbonsäure rest ist,

x und y jeweils 0 oder eine ganze Zahl von 1 oder mehr sind und

n eine ganze Zahl von 1 oder mehr ist.

4. Zusammensetzung nach Anspruch 3, dadurch gekennzeichnet, daß R in der allgemeinen Formel der Amidverbindung ein gesättigtes oder ungesättigtes Kohlenwasserstoffradikal oder ein Radikal, umfassend eine Grundeinheit eines Vinylpolymers oder -copolymers, ist.

5. Zusammensetzung nach Anspruch 3 oder 4, dadurch gekennzeichnet, daß R in der allgemeinen Formel der Amidverbindung ein gesättigtes oder ungesättigtes Kohlenwasserstoffradikal mit 2 bis 23 Kohlenstoffatomen ist.

6. Zusammensetzung nach einem der Ansprüche 1 bis 5, dadurch gekennzeichnet, daß 0,3 bis 3 Gew.-% eines Polyolefinwachses mit niedrigem Molekulargewicht, bezogen auf die Gesamtzusammensetzung, in die Zusammensetzung kompoundiert wird.

7. Zusammensetzung nach Anspruch 6, dadurch gekennzeichnet, daß das Polyolefinwachs mit niedrigem Molekulargewicht Polyethylenwachs, hergestellt durch ein Wärmezersetzungsverfahren, ist.

8. Zusammensetzung nach einem der Ansprüche 1 bis 7, dadurch gekennzeichnet, daß Amine in die Zusammensetzung als Antioxidantien kompoundiert werden.

**Revendications**

1. Composition de résine polyacétal qui comprend de la résine polyacétal, de 0,1 à 30% en poids de noir de carbone, basé sur la composition totale et de 0,1 à 10% en poids d'un autre composant, basé sur la

composition totale, caractérisée en ce que ledit autre composant est un éther copolymère de polypropylène glycol/polyéthylène glycol.

2. Composition selon la revendication 1, caractérisée en ce que 0,1 à 15% en poids d'un composé amide basé sur la composition totale est mélange à la composition de résine polyacétal.

3. Composition selon la revendication 2, caractérisée en ce que ledit composé amide est représenté par la formule générale suivante:

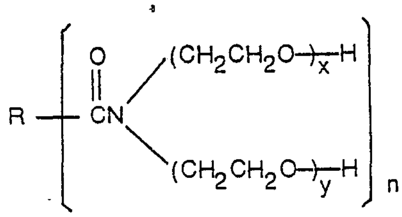

ou

R est un résidu d'acide carboxylique;

x et y sont égaux à zéro ou un nombre entier supérieur ou égal à 1; et n est nombre entier supérieur ou égal à 1.

4. Composition selon la revendication 3, caractérisée en ce que R dans la formule générale du composé amide est un radical hydrocarbure saturé ou insaturé ou un radical comprenant une unité fondamentale d'un polymère ou copolymère vynilique.

5. Composition selon la revendications 3 ou 4, caractérisée en ce que R dans la formule générale du composé amide est un radical hydrocarbure saturé ou insaturé ayant de 2 à 23 atomes de carbone.

6. Composition selon l'une quelconque des revendications 1 à 5, caractérisée en ce que de 0,3 à 3% en poids, basé sur la composition totale, d'une cire polyoléfinique d'un faible poids moléculaire est mélangée à la composition.

7. Composition selon la revendication 6, caractérisée en ce que ladite cire polyoléfinique d'un faible poids moléculaire est une cire polyéthylène préparée par un processus de décomposition thermique.

8. Composition selon l'une quelconque des revendications 1 à 7, caractérisée en ce que les amines sont mélangés à la composition comme antioxydants.